(19)

Europäisches
Patentamt
European
Patent Office
Office européen
des brevets

(11) **EP 4 550 087 A1**

(12) **EUROPEAN PATENT APPLICATION**

(43) Date of publication:
**07.05.2025 Bulletin 2025/19**

(21) Application number: **24197561.4**

(22) Date of filing: **30.08.2024**

(51) International Patent Classification (IPC):
**G06F 1/3203** (2019.01)   **G06F 1/3206** (2019.01)
**G06F 1/3212** (2019.01)

(52) Cooperative Patent Classification (CPC):
**G06F 1/3203; G06F 1/3206; G06F 1/3212**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **30.10.2023 JP 2023185941**

(71) Applicant: **Lenovo (Singapore) Pte. Ltd.
Singapore 556741 (SG)**

(72) Inventors:
• **MAKI, Koutaroh
Yokohama-shi, 220-0012 (JP)**
• **OHSAWA, Osamu
Yokohama-shi, 220-0012 (JP)**

(74) Representative: **Openshaw & Co.
8 Castle Street
Farnham, Surrey GU9 7HR (GB)**

(54) **INFORMATION PROCESSING APPARATUS AND CONTROL METHOD**

(57)     An object is to secure an opportunity to use a battery while maintaining a remaining capacity of the battery.

A power supply circuit is configured to convert power supplied from a power source into operating power and to supply the operating power to a computer system, and the computer system is configured to switch an operating state among a normal state, a first low power state in which power consumption is lower than power consumption in the normal state, and a second low power state in which power consumption is lower than the power consumption in the first low power state, and to change the system state to the second low power state when the system state is the first low power state and an actual measurement value of power consumption is greater than a predetermined reference value.

FIG. 7

EP 4 550 087 A1

## Description

BACKGROUND OF THE INVENTION

Field of the Invention

The present invention relates to an information processing apparatus and a control method.

Description of the Related Art

In recent years, the way information processing apparatuses such as personal computers (PCs) are used has been changing. For example, when an employee performs work for business purposes, the employee generally uses a PC installed in an office. However, with spread of remote work or hybrid work, PCs are increasingly being used in a variety of places such as a home, a rental office, a restaurant, and public transportation. Accordingly, time zones during which PCs are used are diversified, and it is becoming common for the usage not to be limited to predetermined working hours.

The information processing apparatuses are not always used in environments where a commercial power source is available, and may consume power stored in a battery in advance. In order to maintain a state in which the apparatus is capable of being continuously used for a long time, a decrease in power consumption is expected. Meanwhile, the information processing apparatus may be provided with two or more stages of low power states in which power consumption is lower than power consumption in a normal operating state. In general, the lower the power consumption of the system state, the longer the return time to the normal operating state. Therefore, the two or more stages of low power states may be selectively used depending on whether emphasis is on shortening the return time or reducing the power consumption.

For example, Japanese Unexamined Patent Application Publication No. 2015-49808 discloses an information processing apparatus in which power is supplied from a battery, and when the information processing apparatus is in a low power state in which a remaining capacity of the battery is equal to or less than a predetermined threshold, a portion of a memory is set to an non-operational standby mode with low power consumption and when the information processing apparatus is no longer in the low power state, the standby mode of the battery is released. Japanese Unexamined Patent Application Publication No. 2019-220101 discloses an information processing apparatus that enters a first sleep state when transition is performed from an active state to an idle state, that transitions to a second sleep state having a longer return time to the active state than the first sleep state, in a case where there is no operation by a user for a first idle time when entering the first sleep state before a previously set scheduled use-end time and after a previously set scheduled use-start time, and that transitions to the second sleep state, in a case where there is no operation by the user for a second idle time shorter than the first idle time when entering the first sleep state before the scheduled use-start time and after the scheduled use-end time. For example, modern standby and hibernation are applied as the first sleep state and the second sleep state, respectively.

SUMMARY OF THE INVENTION

In recent years, chipsets, which form a core of information processing apparatuses, have been designed to consume less power. In a case where there is a certain remaining capacity of battery, it is possible to maintain a modern standby state, which consumes more power than hibernation, for a long period of time. Alternatively, it may be possible to maintain an active state for a certain period of duration even though the battery is not fully charged. As an example, an operating time during which the active state is capable of being maintained and a duration during which the modern standby is capable of being maintained are longer than those of the latest model that has similar performance and is equipped with a battery of the same capacity as a benchmark model released four years prior to the present application.

However, in the modern standby, computing operations in a host system are not completely stopped. For example, an application program or driver software for providing specific functions (for example, communication, waiting for an operation input, and the like) may be executed, or a part of devices related to these computing operations may operate. In this case, power consumption may unexpectedly increase, and a remaining capacity of the battery may decrease more than expected. Therefore, the duration during which the modern standby state is capable of being maintained and the operating time during which the active state is capable of being maintained are shortened.

The present application has been made to solve the above-described problem, and an information processing apparatus according to one aspect of the present application includes: a computer system; and a power supply circuit configured to convert power supplied from a power source into operating power and to supply the operating power to the computer system, in which the computer system is configured to switch a system state among a normal state, a first low power state, and a second low power state, the first low power state is a state in which power consumption is lower than power consumption in the normal state, the second low power state is a state in which power consumption is lower than the power consumption in the first low power state, the system state is controlled based on an operating time during which the system state is changeable between the normal state and the first low power state, the operating time has a first operating time and a second operating time, the second operating time includes the first operating time and is longer than the first operating time, and the computer system is configured to change the system state to the second low power state when the system state is the first low power state and an actual measurement value of power consumption is greater than a predetermined reference value.

In the information processing apparatus, the computer system may be configured to determine the reference value such that the reference value decreases as an elapsed time from start of the first low power state increases.

In the information processing apparatus, the computer system may be configured to determine the actual measurement value of the power consumption based on a remaining capacity of the battery at a plurality of time points.

In the information processing apparatus, the computer system may be configured to determine the actual measurement value of the power consumption based on an elapsed time from start of the first low power state and a decrease amount in remaining capacity of the battery from the start of the first low power state.

In the information processing apparatus, the reference value for the power consumption may be greater than a standard value of the power consumption in the first low power state.

A control method according to another aspect of the present application is a control method for an information processing apparatus including a power supply circuit configured to supply power supplied from an external power source or a battery to a computer system, in which the computer system is configured to switch a system state among a normal state, a first low power state, and a second low power state, the first low power state is a state in which power consumption is lower than power consumption in the normal state, the second low power state is a state in which power consumption is lower than the power consumption in the first low power state, the control method including causing the information processing apparatus to execute: a step of changing the system state to the second low power state when the system state is the first low power state and an actual measurement value of power consumption is greater than a predetermined reference value.

The above-described aspects of the present application can secure an opportunity to use a battery while maintaining a remaining capacity of the battery.

BRIEF DESCRIPTION OF THE DRAWINGS

FIG. 1 is an external view illustrating an external configuration example of an information processing apparatus according to the present embodiment.
FIG. 2 is a schematic block diagram illustrating a hardware configuration example of the information processing apparatus according to the present embodiment.

FIG. 3 is a schematic block diagram illustrating a functional configuration example of the information processing apparatus according to the present embodiment.
FIG. 4 is an explanatory diagram illustrating an example of setting a power consumption reference value according to the present embodiment.
FIG. 5 is a diagram illustrating an elapsed time from start of modern standby to transition to hibernation.
FIG. 6 is a diagram illustrating a power consumption reference value and a cumulative power consumption amount for each elapsed time from start of modern standby to transition to hibernation.
FIG. 7 is a flowchart illustrating an example of system state control according to the present embodiment.
FIG. 8 is an explanatory diagram illustrating a relationship between a standby budget and a system state.
FIG. 9 is a table illustrating a standby budget setting value according to the present embodiment.
FIG. 10 is a diagram illustrating a relationship between a standby budget setting value and a battery remaining capacity according to the present embodiment.
FIG. 11 is a flowchart illustrating another example of the system state control according to the present embodiment.

DETAILED DESCRIPTION OF THE INVENTION

First, a hardware configuration example of an information processing apparatus 1 according to an embodiment of the present application will be described with reference to the drawings. In the following description, a case in which the information processing apparatus 1 is mainly a laptop type PC (sometimes referred to as a "laptop PC" in the present application) will be described as an example.

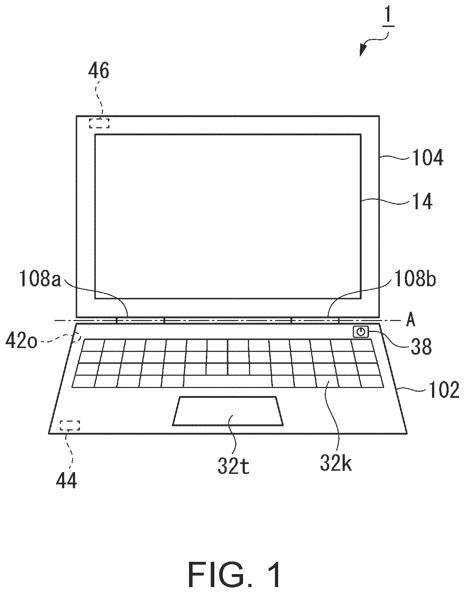

FIG. 1 is an external view illustrating an external configuration example of the information processing apparatus 1 according to the present embodiment.

The information processing apparatus 1 includes two chassis 102 and 104. Each of the chassis 102 and 104 has an oblong surface that is wider in width than in height, and has a flat shape that is thinner in thickness than in height. One side surface of the chassis 102 and one side surface of the chassis 104 are arranged in parallel in a width direction and engaged with each other using hinges 108a and 108b. One of the chassis 102 and 104 is connected to the other to be rotatably movable about a rotation axis A. That is, an angle between surfaces of the chassis 102 and 104 (hereinafter, sometimes referred to as an "opening angle") is made variable, so that both the chassis 102 and 104 are opened and closed. The opening angle of 0° or close to 0° (for example, 45° to 60°) corresponds to a state in which the chassis 102 and 104 are closed. The opening angle that is sufficiently large (for example, an angle greater than a range of 45° to 60°) corresponds to a state in which the chassis 102 and 104 are opened. In a state in which no external force is applied to the chassis 102 and 104, the opening angle is maintained constant.

The chassis 102 includes a lid sensor 44 at a location away from the rotation axis A. The lid sensor 44 detects the open/closed state of the chassis 102 and 104. In the example of FIG. 1, the lid sensor 44 includes a magnetic sensor. A permanent magnet 46 is installed in the chassis 104 at a position facing the lid sensor 44 in a state of being closed with the chassis 102. When the chassis 102 and 104 are in a closed state, the magnetic sensor detects a relatively strong magnetic field because the magnetic sensor is close to the permanent magnet. When the chassis 102 and 104 are in an open state, the detected magnetic field becomes weaker because the magnetic sensor is farther away from the permanent magnet. Therefore, the open/closed state of the chassis 102 and 104 is determined based on strength of the detected magnetic field.

On the surface of the chassis 102, a keyboard 32k, a touchpad 32t, and a power button 38 are disposed. An insertion port (outlet) 42o is installed on the side surface of the chassis 102 in the width direction. The insertion port 42o has a hollow portion into which a plug of an alternating current (AC) adapter 42 is insertable, and is fitted with the inserted plug to fix a position of the plug in contact with an electrode installed on an inner surface of the hollow portion. Direct current (DC) power is supplied to the information processing apparatus 1 from the AC adapter 42 via the plug inserted into the insertion port 42o.

The AC adapter 42 is supplied with AC power from a commercial power source and converts the supplied AC power into DC power with a constant voltage (for example, 3 V to 12 V) .

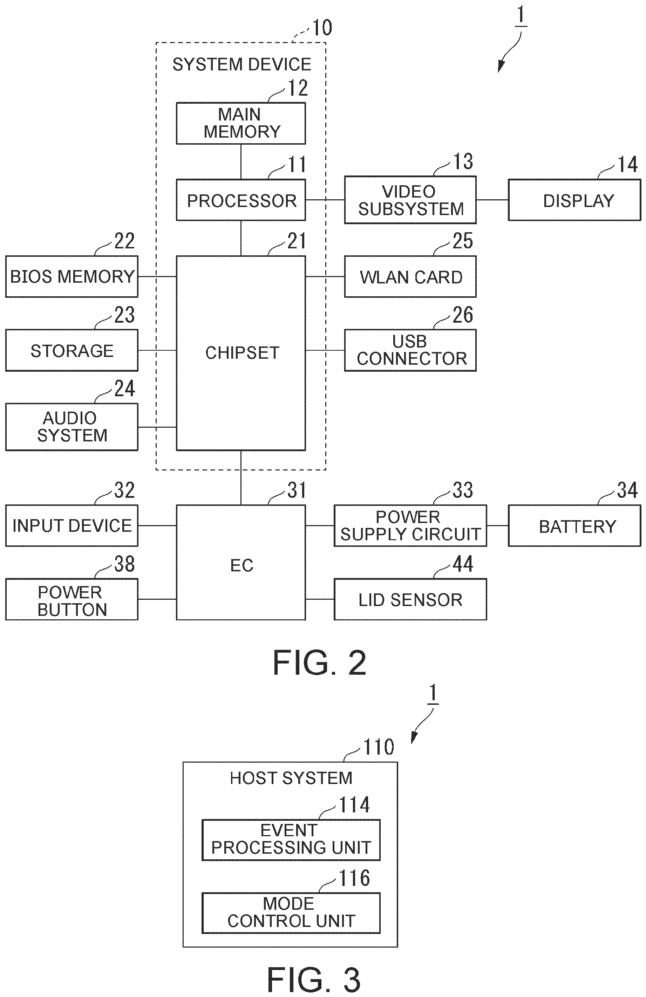

FIG. 2 is a schematic block diagram illustrating a hardware configuration example of the information processing apparatus 1 according to the present embodiment. The information processing apparatus 1 includes a processor 11, a main memory 12, a video subsystem 13, a display 14, a chipset 21, a basic input-output system (BIOS) memory 22, a storage 23, an audio system 24, a wireless local area network (WLAN) card 25, a universal serial bus (USB) connector 26, an embedded controller (EC) 31, an input device 32, a power supply circuit 33, a battery 34, a power button 38, and a lid sensor 44.

The processor 11 executes computing operations in accordance with various commands written in a program, and controls the overall operation of the information processing apparatus 1. The processor 11 may include, for example, one or two or more central processing units (CPUs) .

The main memory 12 is a writable memory that is used as a reading area for programs executed by the processor 11 or as a working area for writing processing data of executed programs. The main memory 12 includes, for example, one or two or more dynamic random access memory (DRAM) chips. The programs include, for example, an operating system (OS), a driver for controlling operations of peripheral devices, various service/utility programs (sometimes referred to as "utilities" in the present application), application programs (sometimes referred to as "apps" in the present application), and the like.

The processor 11, the main memory 12, and the chipset 21 are minimum hardware components of a host system 110 (see FIG. 3). In the present application, the devices constituting the host system 110 may be collectively referred to as a "system device 10". The host system 110 is a computer system that is a core of the information processing apparatus 1. The processor 11 executes a predetermined program and cooperates with the main memory 12 and other hardware to realize the functions of the host system 110. In the present application, the phrase "executing a program" or "execution of a program" includes the meaning of performing processing instructed by commands written in the program.

The video subsystem 13 is a subsystem for realizing functions related to image display. The video subsystem 13 includes a video controller (not illustrated). The video controller performs processing instructed by a drawing command input from the processor 11 and writes display data obtained by the processing into a video memory (not illustrated) provided in the video controller. The video controller reads the written display data from the video memory, and outputs the read display data to the display 14.

The display 14 displays various display screens based on the display data input from the video subsystem 13. The display 14 may be any type of display, such as a liquid crystal display (LCD) or an organic light emitting diode (OLED) display.

The chipset 21 is connected to one or a plurality of peripheral devices and controls the input and output of various data. The chipset 21 includes various input/output interfaces and connects corresponding devices thereto. The chipset 21 includes controllers corresponding to various input/output methods. The chipset 21 includes a controller related to, for example, any one or any combination of a USB, a serial advanced technology attachment (ATA), a serial peripheral interface (SPI) bus, a peripheral component interconnect (PCI) bus, a PCI-Express bus, a low pin count (LPC) bus, and the like. In FIG. 1, examples of the peripheral devices connected to the chipset 21 include the BIOS memory 22, the storage 23, the audio system 24, the WLAN card 25, the USB connector 26, and the EC 31.

System firmware such as the BIOS is pre-stored in the BIOS memory 22. The BIOS memory 22 may store firmware for controlling operations of the EC 31 and other devices. The BIOS memory 22 includes a rewritable nonvolatile memory (for example, an electrically erasable programmable read only memory (EEPROM), a flash ROM, and the like).

The storage 23 is an auxiliary storage device that stores various programs and data executed by the processor 11. The storage 23 includes a rewritable non-volatile memory. The storage 23 may be any of a solid state drive (SSD), a hard disk drive (HDD), and the like.

The audio system 24 executes the input, output, and recording of audio data. The audio system 24 includes a speaker and emits sound based on audio data input to the audio system 24. The audio system 24 includes a microphone, collects sound that reach the audio system 24, and acquires audio data that represents the collected sound.

The WLAN (wireless LAN) card 25 is connected to wireless LAN and performs data communication with other devices directly or indirectly connected to the wireless LAN. The wireless LAN enables transmission and reception of various data between devices in accordance with a predetermined wireless communication method (for example, IEEE 802.11).

The USB connector 26 is a connector for connecting peripheral devices so as to input and output data to and from the peripheral devices in accordance with a USB standard so as to.

The EC 31 monitors an operating environment regardless of a system state of the host system, and monitors and controls states of various devices (peripheral devices, sensors, and the like). The EC 31 includes its own processor, memory, and input/output terminals, and is configured as a microcomputer. The input device 32, the power supply circuit 33, the power button 38, the lid sensor 44, and the like are connected to the EC 31 using the input/output terminals.

The EC 31 has a power control function and controls an operating state of the power supply circuit 33. The EC 31 controls the power supply circuit 33 based on, for example, the system state notified by the host system 110. The system states that the host system 110 can take include, for example, a normal operating state (sometimes referred to as an "active state" or a "normal state" in the present application) and two stages of low power states. The normal mode is the most active state (referred to as an S0 state) among a plurality of stages of system states defined by advanced configuration and power interface (ACPI). The low power state is a system state in which power consumption is lower than power consumption in the normal mode. In the low power state, the operation or function of at least a part (for example, the video subsystem 13 and the display 14) of the devices is stopped. In the low power state, the operation or function of the devices related to the user interface, such as the audio system 24 and the input device 32, may be stopped.

Examples of the two stages of low power states include modern standby and hibernation. The modern standby is an extended state of the S0 state and allows quicker return to the normal mode than hibernation. The modern standby is also referred to as an S0ix state. The hibernation is a system state in which power consumption is even lower than power consumption of modern standby. The hibernation is a resting state in which the power supply to the processor 11 and the main memory 12 is stopped and the operation of the host system 110 is stopped, and corresponds to an S4 state defined in the ACPI. In the hibernation, the operations of more peripheral devices than in the modern standby, for example, all the peripheral devices connected to the chipset 21, are stopped. The modern standby and the hibernation correspond to examples of the first low power state and the second low power state, respectively.

The input device 32 receives a user's operation, generates an operation signal according to the received operation, and outputs the generated operation signal to the EC 31. The input device 32 includes, for example, any of a keyboard, a touchpad, and a pointing device such as a mouse, or any combination thereof. The EC 31 outputs the operation signal received from the input device 32 to the host system 110 via the chipset 21.

The power supply circuit 33 is supplied with DC power from an AC adapter (not illustrated) via the insertion port 42o or from the battery 34. The power supply circuit 33 converts a voltage of the supplied DC power into a voltage required for the operation of each device constituting the information processing apparatus 1, and supplies power having the converted voltage to the device as a supply destination. The power supply circuit 33 includes a voltmeter that measures the voltage of the power supplied from the AC adapter, and notifies the EC 31 of the measured voltage as the supply voltage. The EC 31 determines whether or not power is supplied from the AC adapter based on the supply voltage notified by the power supply circuit 33. The EC 31 is capable of determining whether a power supply mode is an AC mode or a DC mode depending on whether the supply voltage notified by the power supply circuit 33 is equal to or greater than a predetermined supply voltage threshold. The AC mode is a power supply mode in which power supplied from the AC adapter is mainly consumed. The DC mode is a power supply mode in which power discharged from the battery 34 is mainly consumed. The EC 31 notifies the host system 110 of the determined power supply mode via the chipset 21.

The power supply circuit 33 includes, for example, a DC/DC converter, a charge/discharge unit, and the like. Under the control of the EC 31, the power supply circuit 33 controls the necessity of power supply to each device of the information processing apparatus 1. The power supply circuit 33 adjusts an amount of operating power supplied to a predetermined device (for example, the processor 11) among the devices that require power supply.

The charge/discharge unit supplies the remaining power, which is not consumed in each device, to the battery 34 when power is supplied from the AC adapter. In a case where power is not supplied from the AC adapter 42 or in a case where the power supplied from the AC adapter 42 is insufficient for the required power, the charge/discharge unit supplies the power discharged from the battery 34 to each device via the DC/DC converter. The power supply circuit 33 specifies a device to be operated based on a command from the EC 31, and supplies power required for the operation to the specified device.

In addition, the power supply circuit 33 includes a voltmeter that measures an electromotive force of the battery 34, and notifies the EC 31 of the electromotive force measured when no charging is being performed. Information indicating a relationship between the electromotive force and the remaining capacity is set in advance in the EC 31, and the amount of charge stored in the battery 34 is estimated as the remaining capacity based on the electromotive force notified by the power supply circuit 33. The EC 31 notifies the system device 10 of the estimated remaining capacity of the battery 34 via the chipset 21. The EC 31 may notify the system device 10 of the estimated remaining capacity of the battery 34 at regular intervals (for example, every 1 to 15 minutes), or may notify, each time the estimated remaining capacity of the battery 34 changes to a new remaining capacity discretized in a predetermined value range (for example, in increments of 1%), the system device 10 of the remaining capacity obtained by the change. As will be described below, the remaining capacity notified to the system device 10 is used to control the system state.

A secondary battery is used as the battery 34. The secondary battery is a rechargeable battery capable of being charged and discharged. The secondary battery is, for example, a lithium ion battery.

Each time the power button 38 is pressed, the power button 38 controls the state of power supply to the host system 110 of the information processing apparatus 1 to either power on or power off. When the power button 38 is pressed, the power button 38 outputs a press signal indicating the pressing to the EC 31.

The lid sensor 44 detects the open/closed state of the chassis 102 and 104. The lid sensor 44 generates a detection signal indicating the detected open/closed state and outputs the detection signal to the EC 31. The EC 31 specifies the open/closed state based on the detection signal input from the lid sensor 44. For example, in a case where the lid sensor 44 is a magnetic sensor, the EC 31 is capable of determining whether the chassis 102 and 104 is closed based on whether strength of a magnetic field indicated by the detection signal is equal to or greater than a predetermined strength threshold.

In the following description, a state in which the chassis 102 and 104 are opened may be referred to as an "open state" (lid open), and a state in which the chassis 102 and 104 are closed may be referred to as a "closed state" (lid closed). The EC 31 notifies the system device 10 of the determined open/closed state via the chipset 21. The open/closed state notified to the system device 10 may be used to control the system state.

Hereinafter, a functional configuration example of the information processing apparatus 1 according to the present embodiment will be described. FIG. 3 is a schematic block diagram illustrating a functional configuration example of the information processing apparatus 1 according to the present embodiment.

The host system 110 of the information processing apparatus 1 includes an event processing unit 114 and a mode control unit 116.

The event processing unit 114 acquires events related to the control of the system state of the host system 110. The event processing unit 114 acquires, for example, notification information from the EC 31. The notification information from the EC 31 includes the power supply mode, the remaining capacity of the battery 34, the open/closed state of the chassis 102 and 104, the input of the operation signals from the input device 32, and the like. The event processing unit 114 detects an operating status of the host system 110. Examples of elements of the operating status include an execution state of each program, power consumption of the processor 11, and the like. The event processing unit 114 notifies the mode control unit 116 of the acquired event.

The mode control unit 116 controls the system state (operation mode) based on one or both of the operating status and the usage environment of the information processing apparatus 1. In the mode control unit 116, for each pair of a certain system state 1 and another system state 2, transition conditions from the system state 1 as a transition source to the system state 2 as a transition destination are set in advance. The mode control unit 116 refers to the transition conditions from the current system state 1 to the system state 2, and when the current operating state or usage environment satisfies the transition conditions to the system state 2 based on the event notified by the event processing unit 114, the mode control unit 116 transitions the current system state 1 to the system state 2. The mode control unit 116 notifies the EC 31 of the system state determined by the control via the chipset 21. Specific examples of the system state of the host system 110 will be described below.

In the mode control unit 116, a reference value for power consumption when the system state is modern standby (hereinafter, sometimes referred to as a "power consumption reference value") is set in advance. A remaining capacity reference value is a parameter that constitutes elements of transition conditions from the modern standby to the hibernation. The power consumption reference value is a value significantly larger than standard power consumption when the system state is the modern standby (hereinafter, sometimes referred to as a "power consumption standard value"). When the system state is the modern standby, the mode control unit 116 acquires an actual measurement value of power consumption of the information processing apparatus 1 (hereinafter, sometimes referred to as a "power consumption actual measurement value") and compares the acquired power consumption actual measurement value with the power consumption reference value.

The mode control unit 116 transitions the system state from the modern standby to the hibernation when the power consumption actual measurement value is greater than the power consumption reference value. The mode control unit 116 maintains the system state in the modern standby when the power consumption actual measurement value is equal to or less than the power consumption reference value. In the modern standby, a part of programs is executed to operate the devices. The power consumption of the information processing apparatus 1 may unexpectedly increase beyond the expected level. In such a case, it is possible to suppress the decrease in remaining capacity of the battery 34 by transitioning the system state to hibernation.

The mode control unit 116 is capable of calculating the power consumption actual measurement value based on the remaining capacity of the battery 34 notified by the event processing unit 114 at each of a plurality of different time points. The mode control unit 116 is capable of calculating, for example, a ratio of the decrease amount in remaining capacity of the battery 34 to an elapsed time from start (entry) of the modern standby to the latest time point as the power consumption actual measurement value. The decrease amount in remaining capacity of the battery 34 is obtained by subtracting the remaining capacity of the battery 34 at the latest time point from the remaining capacity of the battery 34 at the start of the modern standby. Instead of calculating the power consumption actual measurement value based on the remaining capacity of the battery 34, the mode control unit 116 may approximately adopt, as the power consumption actual measurement value, the sum of the power consumption of the processor 11 notified by the event processing unit 114 and the preset rated power consumption of the device during operation.

Next, an example of the system state according to the present embodiment will be described.

The power off is a state in which the power supplied from the external power source or the battery 34 is not consumed. In the power off state, the operation of most peripheral devices is stopped, except for a part of the devices with low power consumption. The EC 31 starts power supply to each device of the information processing apparatus 1 via the power supply circuit 33 when the press signal is input from the power button 38 in the power off state. When detecting start of power supply to the processor 11, the processor 11 reads the BIOS from the BIOS memory 22, loads the read BIOS into the main memory 12, and executes a start-up process (boot) according to the BIOS. In the start-up process, the processor 11 loads data that has been saved in the storage 23 into the main memory 12. Thereafter, the processor 11 starts up the OS, and after the OS has completed starting up, the processor 11 starts execution of device drivers related to the control of other devices. At this stage, the system state transitions to the normal mode (S0 state).

The hibernation (S4 state) is a resting state in which the operation of the system device 10 is stopped. In the hibernation, image data indicating the execution state of the program immediately before the transition to the hibernation is saved in the storage 23. Even in the hibernation, the operation of most peripheral devices is stopped, except for a part of the devices with low power consumption. When the press signal is input from the power button 38 in the hibernation state, the EC 31 transitions the system state to the normal mode in the same manner as in the power off state. At this time, the processor 11 resumes the execution of the program from the execution state immediately before the transition to the hibernation using the saved image data.

The EC 31 causes the system device 10 to execute a stop process (shutdown) when the system state is in the normal mode or the modern standby and a request from the OS or the press signal from the power button 38 is input. In the stop process, the mode control unit 116 saves data existing in the main memory 12 as a work area at that time to the storage 23. After the data saving is completed, the mode control unit 116 stops the processing by the applications, device drivers, and other programs that are being executed at that time. Thereafter, the processor 11 notifies the EC 31 of the completion of the stop process. The EC 31 stops the power supply to each device via the power supply circuit 33. At this time, the system state becomes power off.

When predetermined transition conditions to the modern standby are satisfied in the normal mode, the mode control unit 116 transitions the system state to the modern standby (S0ix state). Examples of the transition conditions from the normal mode to the modern standby include events such as the display screen remaining unchanged for a certain time (for example, 3 to 10 minutes) or longer without detecting any operation signal from the input device 32, the absence of any application to be executed in response to the operation, and the change in open/closed state of the chassis 102 and 104 from the open state to the closed state. In the modern standby, in addition to the EC 31, a part of the peripheral devices, such as the storage 23 and the WLAN card 25, may continue to operate. In addition, the input device 32 may be operated, and the event processing unit 114 may wait for the operation signal from the input device 32 via the EC 31 and the chipset 21.

When predetermined transition conditions to the hibernation are satisfied in the modern standby, the mode control unit 116 transitions the system state to the hibernation (S4 state). In this case, the mode control unit 116 saves data existing in the main memory 12 as a work area at that time to the storage 23. After the data saving is completed, the mode control unit 116 stops the processing by the applications, device drivers, and other programs that are being executed at that time. Thereafter, the processor 11 notifies the EC 31 of the completion of the stop process. The EC 31 stops the power supply to each device via the power supply circuit 33.

The transition conditions from the modern standby to the hibernation include the power consumption actual measurement value being equal to or less than the power consumption reference value as described above. In addition, any one item or any combination of the following items may be applied as the transition conditions from the modern standby to the hibernation: when the decrease amount in remaining capacity of the battery from the start of the modern standby is equal to or greater than a standby budget setting value, when the modern standby continues for a certain time (for example, 10 to 30 minutes) or longer, when the current time point reaches a preset resting time, when sleep is instructed by the operation signal, when the remaining capacity of the battery 34 is equal to or less than a predetermined limit value, and the like.

When predetermined transition conditions to the normal mode are satisfied in the modern standby, the mode control unit 116 transitions the system state to the normal mode. Examples of the transition conditions from the modern standby to the normal mode include events such as the input of the operation signal from the input device 32, the input of the press signal from the power button 38, and the change in open/closed state of the chassis 102 and 104 from the closed state to the open state.

The mode control unit 116 may apply transition conditions defined in advance in the OS or other programs.

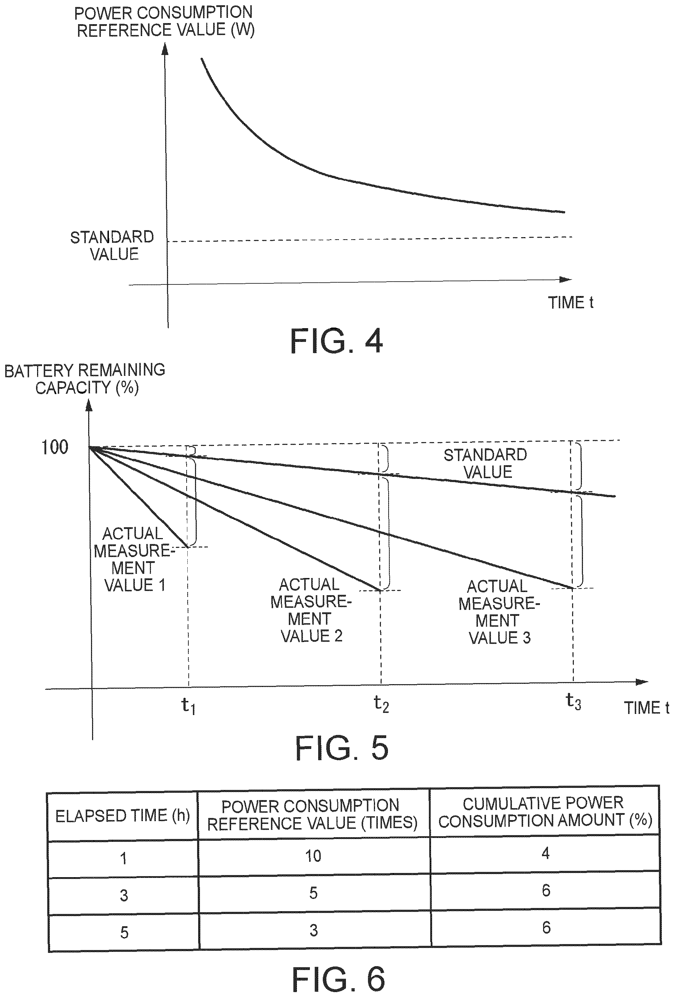

Next, an example of setting the power consumption reference value will be described. The power consumption reference value may be set such that the power consumption reference value decreases as the elapsed time from the start of the modern standby increases, as illustrated in FIG. 4. In other words, the power consumption reference value may be set to a larger value as the elapsed time from the start of the modern standby is shorter. As a result, as illustrated in FIGS. 5 and 6, when the power consumption is high, it is possible to suppress the decrease in remaining capacity of the battery 34 by making the system state transition to hibernation at an earlier stage.

FIG. 5 illustrates elapsed times $t_1$, $t_2$, and $t_3$ from the start of the modern standby to the transition to the hibernation for each of power consumption actual measurement values 1, 2, and 3. Since all the power consumption actual measurement values 1, 2, and 3 are larger than the power consumption standard value, the remaining capacity of the battery 34 decreases at an early stage. According to the present embodiment, the power consumption reference value, which is significantly larger than the power consumption standard value, is compared with the power consumption actual measurement value, and the transition to the hibernation is determined at an earlier stage. The elapsed times $t_1$, $t_2$, and $t_3$ decrease as the power consumption actual measurement values 3, 2, and 1 increase in this order.

In the example of FIG. 6, in a case where the elapsed time from the start of the modern standby to the transition to the hibernation is 1 hour, 3 hours, and 5 hours, the power consumption reference values for the respective elapsed times are set to 10 times, 5 times, and 3 times the power consumption standard value. Assuming the capacity of the battery 34 is 50 Wh and the power consumption standard value in the modern standby is 200 mW, cumulative power consumption amounts from the modern standby to the transition to the hibernation for the respective elapsed times are suppressed to 4%, 6%, and 6%. In this case, it is possible to prevent the temperature of the information processing apparatus 1 from rising by suppressing the heat generation due to power consumption.

The power consumption reference value may be expressed as a product of a power consumption standard value W calculated in advance for a product model or individual product, and a scaling factor n, as shown in Expression (1). The mode control unit 116 transitions the system state from the modern standby to the hibernation when the transition condition shown in Expression (1) is satisfied. In Expression (1), a scaling factor $n_t$ is obtained by a function f(t) that gives a function value greater than 1, which monotonically decreases with an increase in elapsed time t from the start of the modern standby. A indicates the remaining capacity of the battery 34 at the start of the modern standby. B indicates the remaining capacity of the battery 34 at the latest time point t.

$$\frac{A - B}{t} > n_t W \quad \cdots \quad (1)$$

Setting information indicating the elapsed time and the power consumption reference value or the scaling factor, which is preset in the mode control unit 116, may be represented as a data table indicating the power consumption reference value or the scaling factor for each elapsed time, or may be represented as a function for calculating the power consumption reference value or the scaling factor from the elapsed time.

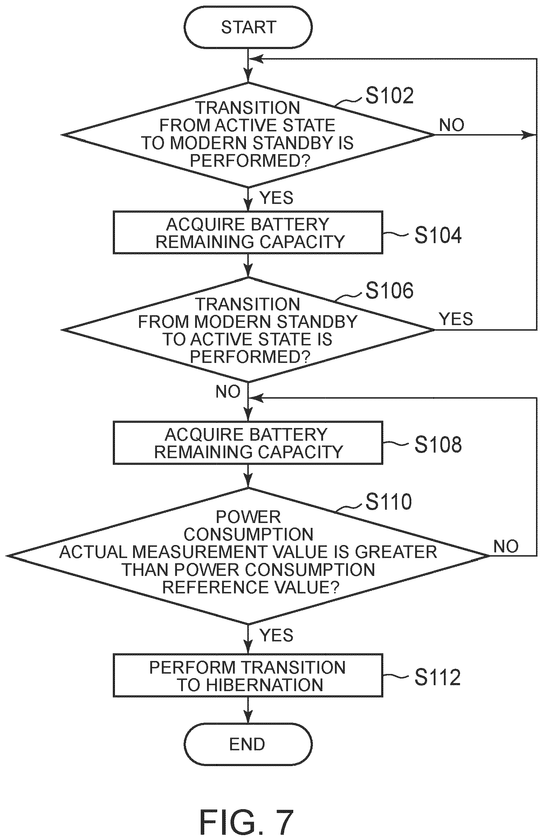

Next, an example of the system state control according to the present embodiment will be described. FIG. 7 is a flowchart illustrating an example of the system state control according to the present embodiment. The process illustrated in FIG. 7 starts when the system state of the host system 110 is in the active state, and includes a process until the system state transitions to the hibernation.

(Step S102) The mode control unit 116 determines whether or not the current operating state or usage environment satisfies the transition conditions from the active state to the modern standby. In a case where it is determined that the conditions are satisfied (YES in step S102), the process proceeds to step S104. In a case where it is determined that the conditions are not satisfied (NO in step S102), the process of step S102 is repeated.

(Step S104) The mode control unit 116 acquires information on the battery remaining capacity notified by the EC 31 via the chipset 21 and the event processing unit 114. The battery remaining capacity notified at that point corresponds to the remaining capacity at the start.

(Step S106) The mode control unit 116 determines whether or not the current operating state or usage environment satisfies the transition conditions from the modern standby to the active state. In a case where it is determined that the conditions are satisfied (YES in step S106), the process returns to step S102. In a case where it is determined that the conditions are not satisfied (NO in step S106), the process proceeds to step S108. (Step S108) The mode control unit 116 acquires information on the battery remaining capacity notified by the EC 31 via the chipset 21 and the event processing unit 114.

(Step S110) The mode control unit 116 calculates the decrease amount in battery remaining capacity by subtracting the latest battery remaining capacity from the remaining capacity at the start, and calculates the power consumption actual measurement value by dividing the decrease amount in battery remaining capacity by the elapsed time from the start of the modern standby to the acquisition time point of the latest battery remaining capacity. The mode control unit 116 refers to the setting information of the preset power consumption reference value to determine the power consumption reference value corresponding to the elapsed time, and compares the determined power consumption reference value with the power consumption actual measurement value. In a case where the power consumption actual measurement value is greater than the power consumption reference value (YES in step S110), the process proceeds to step S112. In a case where the power consumption actual measurement value is equal to or less than the power consumption reference value (NO in step S110), the process returns to step S108.

(Step S112) The mode control unit 116 transitions the system state of the host system 110 from the modern standby to the hibernation. Here, the mode control unit 116 saves data existing in the main memory 12 at that time to the storage 23, and after the data saving is completed, the mode control unit 116 stops the processing by the applications, device drivers, and other programs that are being executed at that time. Thereafter, the processor 11 notifies the EC 31 of the completion of the stop process. The EC 31 stops the power supply to each device via the power supply circuit 33. Thereafter, the process of FIG. 7 ends.

In a case where the decrease amount in remaining capacity of the battery from the start of the modern standby being equal to or greater than a standby budget setting value is applied as the transition conditions from the modern standby to the hibernation, the standby budget setting value may be a constant value, but may also be set to larger as the remaining capacity of the battery 34 at the start of the modern standby (sometimes referred to as "remaining capacity at the start" in the following description) increases.

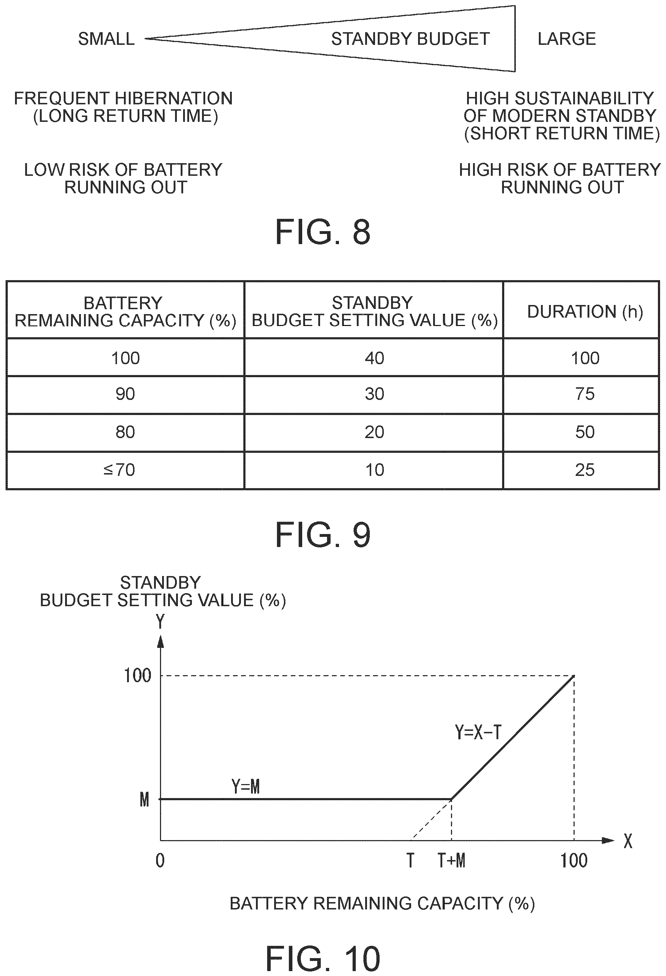

In general, the smaller the standby budget setting value, the more likely it is to transition to the hibernation frequently, and the larger the standby budget setting value, the more likely it is to maintain the modern standby (see FIG. 8). When the system state transitions to the hibernation, the risk of the battery 34 running out of power (battery running out) decreases, whereas the disadvantage in that the return time to the normal mode increases becomes greater. Therefore, the transition to the hibernation is promoted when the remaining capacity of the battery 34 is low and there is a high need to conserve power consumption. On the other hand, when the remaining charge of the battery 34 is high and a high power consumption state is acceptable, the standby budget is set to a large value to increase the likelihood of maintaining the modern standby and to facilitate a quick return to the normal mode.

Next, an example of setting the standby budget will be described. FIG. 9 is a table illustrating the standby budget setting value according to the present embodiment. FIG. 9 illustrates the standby budget setting value and the duration for each battery remaining capacity at the start of the modern standby. The battery remaining capacity and the standby budget setting value are expressed as a percentage (%) of the capacity of the battery 34. The duration is an elapsed time until the decrease amount in battery remaining capacity from the remaining capacity at the start reaches the standby budget setting value while the system state of the modern standby continues. Note that, in the example of FIG. 9, the capacity of the battery 34 is assumed to be 50 Wh, and the power consumption of the information processing apparatus 1 in the modern standby is assumed to be 200 mW.

The standby budget setting values illustrated in FIG. 9 are set to be larger overall as the battery remaining capacity at the start of the modern standby increases. For example, the standby budget setting values are set to 20%, 30%, and 40% for battery remaining capacities of 80%, 90%, and 100%, respectively. In a case where the capacity of the battery 34 is assumed to be 50 Wh and the power consumption in the modern standby is assumed to be 200 mW, the durations with respect to these standby budget setting values are 100 h (approximately 4 days), 75 h (approximately 3 days), and 50 h (approximately 2 days).

A lower limit may be set for the standby budget setting value. In the example of FIG. 9, the standby budget setting value is set to 10% as the lower limit for the battery remaining capacity of 70% or less. By setting the lower limit to the standby budget setting value, the transition to the hibernation is avoided immediately after the start of the modern standby even when the battery remaining capacity is low, thereby securing the opportunity to quickly return to the normal mode.

However, in a case where the battery remaining capacity falls below a predetermined lower limit value, it is not practical to continue operating the information processing apparatus 1 in the normal mode by consuming power supplied from the battery 34. The lower limit value of the battery remaining capacity is set to a value (for example, 3% to 8%) smaller than the lower limit of the standby budget.

Therefore, when the system state is in the normal mode or the modern standby and the battery remaining capacity is less than the limit value, the mode control unit 116 transitions the system state to the hibernation.

Setting information indicating the standby budget setting value for each battery remaining capacity is set in the mode control unit 116 as information indicating a transition condition related to a state transition from the modern standby to the hibernation. As illustrated in FIG. 9, the setting information may be represented by a data table, or may be represented as a parameter of a function for deriving the standby budget setting value from the battery remaining capacity. A relationship between the battery remaining capacity X and the standby budget setting value Y illustrated in FIG. 10 is expressed as Y = X - T when X is equal to or greater than T + M and equal to or less than 100%, and the relationship is expressed as T = M when X is equal to or greater than 0% and equal to or less than T + M. In this case, a target T and a lower limit M are parameters. The target corresponds to a reference value of the battery remaining capacity in a case where the system state transitions from the modern standby to the hibernation, when the battery remaining capacity X is equal to or greater than T + M.

In the examples of FIGS. 9 and 10, the target T and the lower limit M are 60% and 10%, respectively, but are not limited to this. The target T and lower limit M may be appropriately adjusted depending on the designed battery life and the user's psychology. Typically, the target T and the lower limit M are approximately 50% to 70% and 5% to 15%, respectively.

When the battery remaining capacity is equal to or greater than a second threshold, an upper limit may be set for the standby budget. The second threshold is set to a value (for example, 85% to 95%) greater than the battery remaining capacity threshold (70% in the examples of FIGS. 9 and 10) that provides the lower limit of the standby budget. In this case, the duration of the modern standby is controlled so that the decrease amount in battery remaining capacity falls within the upper limit of the standby budget.

In the example described above, a case has been mainly described in which the actual measurement value of the power consumption of the information processing apparatus 1 is determined based on the difference between the battery remaining capacity at the start of the modern standby and the battery remaining capacity at the latest time point, and the elapsed time from the start of the modern standby to the latest time point, but the present application is not limited to this. The mode control unit 116 may determine the actual measurement value of the power consumption based on the change over time in remaining capacity of the battery between the time points which are more subdivided in terms of time. For example, the mode control unit 116 may determine the actual measurement value of the power consumption by dividing the difference between the remaining capacity of the battery at the latest sample time point and the remaining capacity of the battery at a sample time point immediately preceding the latest sample time by a sampling time interval. As a result, in a case where an event causing a rapid fluctuation in power consumption occurs, the mode control unit 116 is able to immediately transition the system state to the hibernation. Additionally, the mode control unit 116 may determine the difference in battery remaining capacity between adjacent sample time points for each sample time point, predict the difference in battery remaining capacity at the current time point from the determined difference in battery remaining capacity, and calculate a predicted value of the power consumption obtained by dividing the predicted change amount by the sampling time interval, as the actual measurement value of the power consumption. As a result, the power consumption based on the most recent battery remaining capacity is predicted. In addition, even though the battery remaining capacity is temporarily lost, the system state is stably controlled based on the power consumption predicted from the known battery remaining capacity.

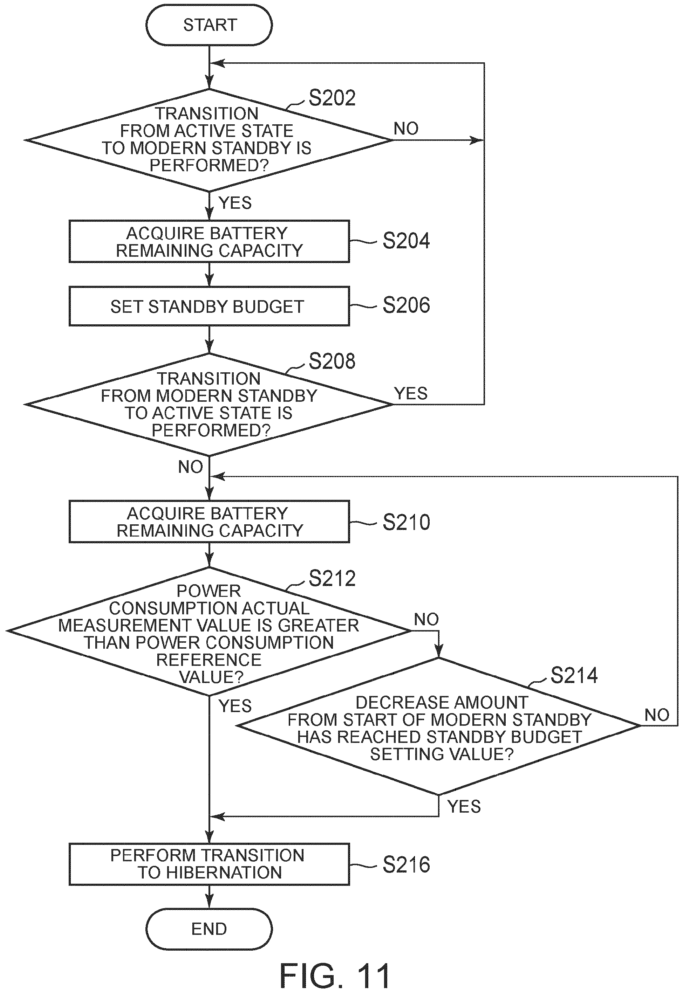

Next, another example of the system state control according to the present embodiment will be described. FIG. 11 is a flowchart illustrating another example of the system state control according to the present embodiment. The process illustrated in FIG. 11 also starts when the system state of the host system 110 is in the active state, and includes a process until the system state transitions to the hibernation.

(Step S202) The mode control unit 116 determines whether or not the current operating state or usage environment satisfies the transition conditions from the active state to the modern standby. In a case where it is determined that the conditions are satisfied (YES in step S202), the process proceeds to step S204. In a case where it is determined that the conditions are not satisfied (NO in step S202), the process of step S202 is repeated.

(Step S204) The mode control unit 116 acquires information on the battery remaining capacity notified by the EC 31 via the chipset 21 and the event processing unit 114. The battery remaining capacity notified at that point corresponds to the remaining capacity at the start.

(Step S206) The mode control unit 116 refers to the preset standby budget setting information and specifies the standby budget standby budget setting value corresponding to the acquired battery remaining capacity.

(Step S208) The mode control unit 116 determines whether or not the current operating state or usage environment satisfies the transition conditions from the modern standby to the active state. In a case where it is determined that the conditions are satisfied (YES in step S208), the process returns to step S202. In a case where it is determined that the conditions are not satisfied (NO in step S208), the process proceeds to step S210. (Step S210) The mode control unit 116 acquires information on the battery remaining capacity notified by the EC 31 via the chipset 21 and the event processing unit 114.

(Step S212) The mode control unit 116 calculates the decrease amount in battery remaining capacity by subtracting the latest battery remaining capacity from the remaining capacity at the start, and calculates the power consumption actual measurement value by dividing the decrease amount in battery remaining capacity by the elapsed time from the start of the modern standby to the acquisition time point of the latest battery remaining capacity. The mode control unit 116 refers to the setting information of the preset power consumption reference value to determine the power consumption reference value corresponding to the elapsed time, and compares the determined power consumption reference value with the power consumption actual measurement value. In a case where the power consumption actual measurement value is greater than the power consumption reference value (YES in step S212), the process proceeds to step S216. In a case where the power consumption actual measurement value is equal to or less than the power consumption reference value (NO in step S212), the process proceeds to step S214.

(Step S214) The mode control unit 116 determines whether or not the decrease amount in battery remaining capacity has reached the specified standby budget setting value. In a case where it is determined that the specified standby budget setting value has been reached (YES in step S214), the process proceeds to step S216. In a case where it is determined that the specified standby budget setting value has not been reached (NO in step S214), the process returns to step S210.

(Step S216) The mode control unit 116 transitions the system state of the host system 110 from the modern standby to the hibernation. Here, the mode control unit 116 saves data existing in the main memory 12 at that time to the storage 23, and after the data saving is completed, the mode control unit 116 stops the processing by the applications, device drivers, and other programs that are being executed at that time. Thereafter, the processor 11 notifies the EC 31 of the completion of the stop process. The EC 31 stops the power supply to each device via the power supply circuit 33. Thereafter, the process of FIG. 11 ends.

In the above description, the information processing apparatus 1 is not limited to a laptop PC and may be realized as a portable electronic device in different forms, such as a tablet PC or a 2-in-1 PC.

In addition, the first low power state and the second low power state are not limited to the modern standby and the hibernation, respectively. The second low power state need only be a system state in which the power consumption of the host system 110 is lower than the power consumption in the first low power state. For example, the first low power state and the second low power state may be an S3 state and an S4 state defined in the ACPI, respectively.

As described above, the information processing apparatus 1 according to the present embodiment includes the computer system (for example, the host system 110) and the power supply circuit 33. The power supply circuit 33 supplies power from the external power source or the battery 34 to the computer system. The computer system is configured to switch the system state among the normal state, the first low power state, and the second low power state, in which the first low power state is a state in which power consumption is lower than power consumption in the normal state, and the second low power state is a state in which power consumption is lower than power consumption in the first low power state. The computer system changes the system state to the second low power state when the system state is the first low power state and the actual measurement value of the power consumption (for example, the power consumption actual measurement value) is greater than a predetermined reference value (for example, the power consumption reference value).

The first low power state may be the modern standby, and the second low power state may be the hibernation mode.

With this configuration, when the system state is the first low power state and the actual measurement value of the power consumption is greater than the reference value, the system state is changed to the second low power state in which the power consumption is lower than the power consumption in the first low power state. By changing the system state to the second low power state when the actual power consumption is high, it is possible to reduce the power consumption, thereby extending the maintenance time of the battery 34. In addition, it is possible to suppress heat generation by reducing the power consumption.

The computer system may determine the reference value such that the reference value decreases as the elapsed time from the start of the first low power state increases.

With this configuration, the reference value is determined to decrease as the elapsed time from the start of the first low power state increases, so that the system state is changed to the second low power state at an earlier stage as the actual measurement value of the power consumption increases. By changing the system state to the second low power state at an early stage, it is possible to reduce the power consumption and to suppress the heat generation.

The computer system may determine the actual measurement value of the power consumption based on the remaining capacity of the battery 34 at a plurality of time points.

Here, the computer system may be configured to determine the actual measurement value of the power consumption based on the elapsed time from start of the first low power state and the decrease amount in remaining capacity of the battery 34 from the start of the first low power state.

With this configuration, a rate of change over time in remaining capacity of the battery 34 is determined as the actual measurement value of the power consumption. Therefore, the computer system is capable of determining the power consumption of the entire information processing apparatus 1 without referring to the operating state of each device in the information processing apparatus 1.

The reference value of the power consumption may be greater than the standard value of the power consumption in the first low power state.

With this configuration, the system state changes to the second low power state when the actual power consumption in the first low power state is greater than the standard power consumption. By changing the system state to the second low power state, it is possible to reduce the power consumption of the information processing apparatus 1 and to suppress the heat generation.

Although the embodiment of the present invention has been described in detail with reference to the drawings, the specific configurations are not limited to the above-described embodiment, and the present application includes designs and the like within a scope not departing from the spirit of the invention. It is possible to optionally combine the configurations described in the above-described embodiment.

Description of Symbols

1 information processing apparatus
10 system device
11 processor
12 main memory
13 video subsystem
14 display
21 chipset
22 BIOS memory
23 storage
24 audio system
25 WLAN card
26 USB connector
31 EC
32 input device
32k keyboard
32t touchpad
33 power supply circuit
34 battery
38 power button
42o insertion port
44 lid sensor
102, 104 chassis
108a, 108b hinge
110 host system
114 event processing unit

116 mode control unit

**Claims**

1. An information processing apparatus comprising:

   a computer system; and
   a power supply circuit,
   wherein the power supply circuit is configured to supply power supplied from an external power source or a battery to the computer system,
   the computer system is configured to switch a system state among a normal state, a first low power state, and a second low power state,
   the first low power state is a state in which power consumption is lower than power consumption in the normal state,
   the second low power state is a state in which power consumption is lower than the power consumption in the first low power state, and
   the computer system is configured to change the system state to the second low power state when the system state is the first low power state and an actual measurement value of power consumption is greater than a predetermined reference value.

2. The information processing apparatus according to claim 1,
   wherein the computer system is configured to determine the reference value such that the reference value decreases as an elapsed time from start of the first low power state increases.

3. The information processing apparatus according to claim 1,
   wherein the computer system is configured to determine the actual measurement value of the power consumption based on a remaining capacity of the battery at a plurality of time points.

4. The information processing apparatus according to claim 3,
   wherein the computer system is configured to determine the actual measurement value of the power consumption based on an elapsed time from start of the first low power state and a decrease amount in remaining capacity of the battery from the start of the first low power state.

5. The information processing apparatus according to claim 1,
   wherein the reference value for the power consumption is greater than a standard value of the power consumption in the first low power state.

6. The information processing apparatus according to claim 1,

wherein the first low power state is modern standby, and
the second low power state is hibernation.

7. A control method for an information processing apparatus including a power supply circuit configured to supply power supplied from an external power source or a battery to a computer system, in which the computer system is configured to switch a system state among a normal state, a first low power state, and a second low power state, the first low power state is a state in which power consumption is lower than power consumption in the normal state, the second low power state is a state in which power consumption is lower than the power consumption in the first low power state, the control method comprising:
changing the system state to the second low power state when the system state is the first low power state and an actual measurement value of power consumption is greater than a predetermined reference value.

8. The control method according to claim 7, further comprising determining the reference value such that the reference value decreases as an elapsed time from start of the first low power state increases.

9. The control method according to claim 7, further comprising determining the actual measurement value of the power consumption based on a remaining capacity of the battery at a plurality of time points.

10. The control method according to claim 9, further comprising determining the actual measurement value of the power consumption based on an elapsed time from start of the first low power state and a decrease amount in remaining capacity of the battery from the start of the first low power state.

11. The control method according to claim 7, wherein the reference value for the power consumption is greater than a standard value of the power consumption in the first low power state.

12. The control method according to claim 7, wherein the first low power state is modern standby, and the second low power state is hibernation.

<u>1</u>

46

104

14

108a

108b

A

42o

38

102

44

32t

32k

FIG. 1

FIG. 2

FIG. 3

POWER CONSUMPTION
REFERENCE VALUE (W)

STANDARD
VALUE

TIME t

# FIG. 4

BATTERY REMAINING
CAPACITY (%)

100

ACTUAL
MEASURE-
MENT
VALUE 1

STANDARD
VALUE

ACTUAL
MEASURE-
MENT
VALUE 2

ACTUAL
MEASURE-
MENT
VALUE 3

$t_1$          $t_2$          $t_3$    TIME t

# FIG. 5

| ELAPSED TIME (h) | POWER CONSUMPTION REFERENCE VALUE (TIMES) | CUMULATIVE POWER CONSUMPTION AMOUNT (%) |
|---|---|---|
| 1 | 10 | 4 |
| 3 | 5 | 6 |
| 5 | 3 | 6 |

# FIG. 6

```
                    ┌─────────┐
                    │  START  │
                    └─────────┘
                         │
                    ╱─────────╲  ～S102
                   ╱ TRANSITION ╲         NO
                  ╱ FROM ACTIVE  ╲──────────────►
                  ╲ STATE TO     ╱
                   ╲MODERN STANDBY╱
                    ╲IS PERFORMED?╱
                     ╲─────────╱
                       │ YES
              ┌──────────────────┐
              │ ACQUIRE BATTERY  │  ～S104
              │ REMAINING CAPACITY│
              └──────────────────┘
                       │
                    ╱─────────╲  ～S106
                   ╱ TRANSITION ╲        YES
                  ╱ FROM MODERN  ╲──────────────►
                  ╲ STANDBY TO   ╱
                   ╲ACTIVE STATE ╱
                    ╲IS PERFORMED?╱
                     ╲─────────╱
                       │ NO
              ┌──────────────────┐
              │ ACQUIRE BATTERY  │  ～S108
              │ REMAINING CAPACITY│
              └──────────────────┘
                       │
                    ╱─────────╲  ～S110
                   ╱  POWER     ╲
                  ╱ CONSUMPTION  ╲        NO
                 ╱ACTUAL MEASURE- ╲──────────────►
                 ╲MENT VALUE IS   ╱
                  ╲GREATER THAN   ╱
                   ╲POWER CONSUMP-╱
                    ╲TION REF VAL?╱
                     ╲─────────╱
                       │ YES
              ┌──────────────────┐
              │ PERFORM TRANSITION│  ～S112
              │  TO HIBERNATION  │
              └──────────────────┘
                       │
                    ┌─────────┐
                    │   END   │
                    └─────────┘
```

FIG. 7

SMALL ◄————————— STANDBY BUDGET | LARGE

FREQUENT HIBERNATION
(LONG RETURN TIME)

HIGH SUSTAINABILITY
OF MODERN STANDBY
(SHORT RETURN TIME)

LOW RISK OF BATTERY
RUNNING OUT

HIGH RISK OF BATTERY
RUNNING OUT

## FIG. 8

| BATTERY REMAINING CAPACITY (%) | STANDBY BUDGET SETTING VALUE (%) | DURATION (h) |
|---|---|---|
| 100 | 40 | 100 |
| 90 | 30 | 75 |
| 80 | 20 | 50 |
| ≤70 | 10 | 25 |

## FIG. 9

STANDBY
BUDGET SETTING VALUE (%)

BATTERY REMAINING CAPACITY (%)

## FIG. 10

START

S202
TRANSITION
FROM ACTIVE STATE
TO MODERN STANDBY IS
PERFORMED? — NO

YES

ACQUIRE BATTERY
REMAINING CAPACITY — S204

SET STANDBY BUDGET — S206

S208
TRANSITION
FROM MODERN STANDBY
TO ACTIVE STATE IS
PERFORMED? — YES

NO

ACQUIRE BATTERY
REMAINING CAPACITY — S210

S212
POWER
CONSUMPTION ACTUAL
MEASUREMENT VALUE IS GREATER
THAN POWER CONSUMPTION
REFERENCE
VALUE? — NO

YES

S214
DECREASE AMOUNT
FROM START OF MODERN STANDBY
HAS REACHED STANDBY BUDGET
SETTING VALUE? — NO

YES

PERFORM TRANSITION
TO HIBERNATION — S216

END

FIG. 11

Europäisches
Patentamt
European
Patent Office
Office européen
des brevets

# EUROPEAN SEARCH REPORT

**Application Number**

EP 24 19 7561

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/201551 A1 (IMAI TAKUMI [JP] ET AL) 17 July 2014 (2014-07-17) <br> * paragraph [0032]; figure 1 * <br> * paragraphs [0042] - [0048]; figure 2 * <br> * paragraph [0064]; figure 3 * <br> * paragraphs [0097] - [0100]; figure 6 * <br> ----- | 1-12 | INV. <br> G06F1/3203 <br> G06F1/3206 <br> G06F1/3212 |
| A | JP H11 85301 A (MATSUSHITA ELECTRIC IND CO LTD) 30 March 1999 (1999-03-30) <br> * paragraphs [0005], [0024]; figure 3 * <br> ----- | 1-12 | |
| A | US 2019/073023 A1 (KOSUGI KAZUHIRO [JP] ET AL) 7 March 2019 (2019-03-07) <br> * paragraph [0075]; figure 7 * <br> ----- | 1-12 | |

**TECHNICAL FIELDS SEARCHED (IPC)**

G06F

The present search report has been drawn up for all claims

| Place of search | Date of completion of the search | Examiner |
|---|---|---|
| The Hague | 27 January 2025 | Ballerstein, Jens |

EPO FORM 1503 03.82 (P04C01)

## ANNEX TO THE EUROPEAN SEARCH REPORT
## ON EUROPEAN PATENT APPLICATION NO.

EP 24 19 7561

This annex lists the patent family members relating to the patent documents cited in the above-mentioned European search report.
The members are as contained in the European Patent Office EDP file on
The European Patent Office is in no way liable for these particulars which are merely given for the purpose of information.

27-01-2025

| Patent document cited in search report | | Publication date | Patent family member(s) | | Publication date |
|---|---|---|---|---|---|
| US 2014201551 | A1 | 17-07-2014 | JP | 5764150 B2 | 12-08-2015 |
| | | | JP | 2014137680 A | 28-07-2014 |
| | | | US | 2014201551 A1 | 17-07-2014 |
| JP H1185301 | A | 30-03-1999 | NONE | | |
| US 2019073023 | A1 | 07-03-2019 | JP | 6409240 B1 | 24-10-2018 |
| | | | JP | 2019046391 A | 22-03-2019 |
| | | | US | 2019073023 A1 | 07-03-2019 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015049808 A

- JP 2019220101 A